# EUROPÄISCHE PATENTSCHRIFT

(11) **EP 0 580 605 B1**
(45) Veröffentlichungstag und Bekanntmachung des Hinweises auf die Patenterteilung: **14.12.1994**
(21) Anmeldenummer: 92906500.1
(22) Anmeldetag: 13.03.1992
(51) Int. Cl.: B62D 25/08, B62D 25/04, B62D 23/00

(54) **TRAGSTRUKTUR EINER KAROSSERIE EINES PERSONENKRAFTWAGENS**
BEARING STRUCTURE FOR THE COACHWORK OF A PASSENGER CAR
STRUCTURE PORTANTE D'UNE CARROSSERIE DE VOITURE PARTICULIERE

(30) Priorität: 19.04.1991 DE 4112814
(43) Veröffentlichungstag der Anmeldung: 02.02.1994
(73) Patentinhaber: AUDI AG, 85002 Ingolstadt (DE)
(72) Erfinder: ENNING, Norbert, D-8071 Denkendorf (DE); TIMM, Heinrich, D-8070 Ingolstadt (DE)
(74) Vertreter: Engelhardt, Harald
(86) Internationale Anmeldenummer: EP9200554
(87) Internationale Veröffentlichungsnummer: WO9218369

(56) Entgegenhaltungen:
- GB-A- 527 068
- US-A- 2 986 423
- US-A- 3 073 647
- US-A- 4 304 434

## Beschreibung

Die Erfindung betrifft eine Tragstruktur einer Karosserie eines Personenkraftwagens nach dem Oberbegriff des Anspruchs 1.

Eine bekannte und übliche Tragstruktur einer Karosserie eines Personenkraftwagens umfaßt eine Bodenstruktur mit jeweils einem an der Fahrzeugseite in Längsrichtung verlaufenden Schweller, an den sich zur Fahrzeugrückseite hin jeweils ein hinteres Radhaus anschließt. Als Verbindung des Karosseriebereichs oberhalb des Radhauses mit der Dachstruktur ist wenigstens ein Pfosten eingesetzt. Wenn ein hinteres, seitliches und feststehendes Dreiecksfenster in der Karosserie enthalten ist, werden zu beiden Seiten dieses Fensters ein vorderer Pfosten C und ein hinterer Pfosten D verwendet.

Weiter ist es bekannt (DE-A-33 43 682), einen Radhausträger als Verbindung zwischen dem Schweller und dem zugeordneten Pfosten, beispielsweise den Pfosten C, zu verwenden. Ein solcher Radhausträger verläuft in einem Bogen zumindest teilweise um das Radhaus und trifft mit einem Ende etwa senkrecht von oben auf das hintere Schwellerende. Dadurch ist der hintere Türausschnitt sehr weit offen und im unteren Bereich nur durch den Schweller begrenzt. Für den Seitencrash stellt diese große Tragstrukturöffnung eine Schwachstelle dar. Zusätzlich ist zu berücksichtigen, daß bei der üblichen Konstruktion mit einer Längsträgereinschnürung zwischen Radhaus, Rücksitzbank und Achsbefestigungspunkt, dem sogenannten "Hundebein" ohnehin eine problembehaftete Schwachstelle hinsichtlich der Karosseriesteifigkeit vorliegt.

Bei üblichen Konstruktionen endet zudem der Pfosten D im Blechgewölbe des oberen Radhauses, wodurch eine Kraftflußlücke des Seitenrahmens zwischen dem Schweller und dem Pfosten D entsteht.

Übliche, selbsttragende Fahrzeugkarosserien für Personenkraftwagen sind, einschließlich der Tragstruktur, aus Blechteilen hergestellt. Träger mit Hohlprofilen werden dabei jeweils aus wenigstens zwei miteinander verschweißten Blechen hergestellt. Die zum Aufbau solcher Karosserien verwendeten Stahlbleche werden im Tiefziehverfahren verformt. Die Preßwerkzeuge zum Verformen der Bleche sind verhältnismäßig teuer, lassen jedoch hohe Stückzahlen zu, so daß für eine Großserienfertigung damit eine kostengünstige Lösung zur Verfügung steht. Aufgrund der hohen Werkzeuginvestitionen gestaltet sich das beschriebene Verfahren für Kleinserien jedoch sehr kostenintensiv.

Es ist daher insbesondere für Kleinserien bekannt (EP 0 146 716 B1), Fahrzeugkarosserien für Personenkraftwagen mit einer Tragstruktur aus Hohlprofilen herzustellen, welche durch Knotenelemente miteinander verbunden sind. Die Hohlprofile sind dabei als Leichtmetall-Strangprofile und die Knotenelemente als Leichtmetall-Gußteile ausgebildet. Neben einer kostengünstigeren Lösung für Kleinserien werden mit einer solchen Konstruktion vorteilhaft auch geringere Karosseriegewichte und Verbesserungen beim Korrosionsschutz erreicht. Hier ist eine Tragstruktur einer Karosserie eines Personenkraftwagens gezeigt, mit einer Bodenstruktur, mit jeweils einem an der Fahrzeugseite in Längsrichtung verlaufenden Schweller, mit je einem sich anschließenden, hinteren Radhaus, mit einem Pfosten C und einem Pfosten D zur Verbindung des Bereichs oberhalb eines Radhauses mit der Dachstruktur und mit einem Radhausträger als Verbindung zwischen dem Schweller 2 und den Pfosten C und D. Der Radhausträger ist hier an einer Verbindungsstelle vor dem rückwärtigen Ende des Schwellers bzw. in einem Abstand zum Radhaus und damit hin zur Mitte des unteren Türausschnitts und dem Schweller verbunden. Von dieser Verbindungsstelle ausgehend steigt der Radhausträger mit einem ersten, unteren Trägerbereich in einem flachen Winkel nach hinten und oben an. Der Radhausträger biegt dann anschließend mit einem zweiten Trägerbereich in einem Bogen zu einer mehr senkrechten Richtung nach oben ab und liegt in diesem Bereich am hinteren Radhaus an.

Aufgabe der Erfindung ist es, eine gattungsgemäße Tragstruktur einer Karosserie eines Personenkraftwagens so weiterzubilden, daß die Karosseriesteifigkeit und das Seitencrashverhalten im Bereich des hinteren Türausschnitts durch eine neue, hintere Karosseriestruktur verbessert werden.

Diese Aufgabe wird mit den Merkmalen des Anspruchs 1 gelöst.

Gemäß Anspruch 1 biegt der Radhausträger anschließend an den zweiten Trägerbereich mit einem dritten, oberen Trägerbereich in einem zweiten Bogen wieder zu einer mehr waagrechten Richtung nach schräg oben und hinten ab. Ein geeigneter Anstiegswinkel zwischen dem Schweller und dem ersten Trägerbereich beträgt ca. 20°, zwischen dem Schweller und dem zweiten Trägerbereich ca. 60° und zwischen dem Schweller und dem dritten Trägerbereich ca. 30° (Anspruch 2). Mit dieser Ausbildung des Radhausträgers ist eine einfache Anbindung mit hoher Karosseriesteifigkeit an den Dachbereich möglich. Dazu ist der Pfosten C auf dem dritten Trägerbereich nach dem zweiten Bogen abgestützt und dort verbunden. Der Radhausträger ist bis zur Wurzel des Pfosten D geführt und mit dem Pfosten D verbunden. Dadurch wird die bei üblichen Konstruktionen vorliegende Kraftflußlücke des Seitenrahmens zwischen dem Schweller und dem Pfosten D geschlossen. Kräfte, insbesondere bei einem Crash auftretende Kräfte, werden dadurch besser verteilt, auch über den Pfosten D abgefangen und teilweise in die Dachstruktur geleitet. Der Radhausträger als Leichtmetall-Strangprofil mit einem geschlossenen Hohlprofilquerschnitt ausgebildet. Ebenso können auch angrenzende Träger als LeichtmetallStrangprofile ausgebildet sein. Solche Leichtmetall-Strangprofile sind preiswert herzustellen und können durch konstruktive Ausbildung des Profils über die Wandstärke und den Profilquerschnitt an die Anforderungen hinsichtlich der Steifigkeit und des Crashverhaltens angepaßt werden.

Wenn der Pfosten C, wie üblich, schräg verläuft, entsteht zwischen dem Radhausträger und dem Pfosten C ein Dreieck, in das nach Anspruch 3 vorteilhaft eine Schloßbolzenaufnahme für das Türschloß eingesetzt werden kann. Diese Schloßbolzenaufnahme kann als stabiles Teil, beispielsweise als Gußteil, ausgeführt sein und trägt zu einer weiteren Versteifung dieses Bereichs und damit zu einer Erhöhung der Sicherheit bei einem Seitencrash bei.

Eine vorteilhafte Verbindung des Radhausträgers mit dem Pfosten D wird mit Anspruch 4 vorgeschlagen, wobei der Radhausträger in den Radhausverbund innen-außen eingebettet und an seinem oberen Trägerbereich durch das Radhaus außen und innen umfaßt ist, wobei dies die Verlängerung des Pfosten D nach unten bildet. Damit wird ein stabiler Verbund geschaffen, an den auch noch weitere Seitenteile angeschlossen werden können.

Anhand einer Zeichnung wird die Erfindung mit weiteren Einzelheiten, Merkmalen und Vorteilen näher erläutert.

Es zeigen
- Fig. 1: eine Seitenansicht der Tragstruktur einer Karosserie eines Personenkraftwagens im Bereich des hinteren Türausschnitts und
- Fig. 2: einen Schnitt durch einen Radhausträger entlang der Linie A-A aus Fig. 1.

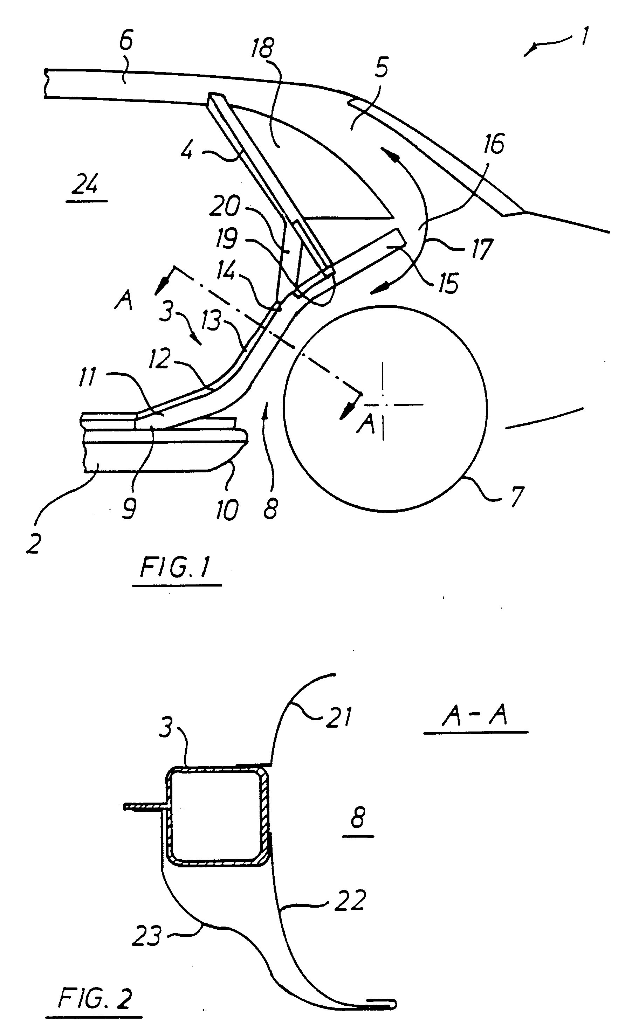

In Fig. 1 ist ein Teil einer Karosserie 1 eines Personenkraftwagens im Bereich eines hinteren Türausschnitts 24 dargestellt, mit einem Teil der Tragstruktur bestehend aus einem Schweller 2, einem Radhausträger 3, einem Pfosten c (4) und einem Pfosten D (5). Der Pfosten C (4) und der Pfosten D (5) gehen über in die Dachstruktur 6.

Weiter ist schematisch ein Fahrzeugrad 7 dargestellt, um dessen oberen Bereich herum das an sich bekannte (aus Gründen der Übersichtlichkeit jedoch nicht dargestellte) Radhaus 8 verläuft.

Der Radhausträger 3 ist am Schweller 2 an einer Verbindungsstelle 9 angesetzt, die vor dem rückwärtigen Ende 10 des Schwellers 2 bzw. in einem Abstand zum Radhaus 8, hin zur Mitte des Türausschnitts 24 liegt.

Von dieser Verbindungsstelle 9 steigt der Radhausträger 3 mit einem ersten, unteren Trägerbereich 11 in einem flachen Winkel von 20° schräg nach hinten oben an.

Etwa über dem rückwärtigen Schwellerende 10 biegt der Radhausträger 3 dann in einem Bogen 12 zu einem mittleren, zweiten Trägerbereich 13 in eine mehr senkrechte Richtung mit einem Anstiegswinkel (bezogen auf den Schweller 2) von ca. 60° nach oben ab. In diesem Bereich liegt der Radhausträger 3 am Radhaus 8 an bzw. bildet dessen Begrenzung, wie dies im Schnitt nach Fig. 2 weiter unten genauer erläutert ist.

Anschließend an den mittleren, zweiten Trägerbereich 13 biegt der Radhausträger 3 in einem zweiten Bogen 14 zu einem dritten, oberen Trägerbereich 15 in eine wieder mehr waagrechte Richtung ab mit einem Anstiegswinkel gegenüber dem Schweller 2 von ca. 30°. Insgesamt hat der Radhausträger 3 somit eine flache S-Form.

Der obere, dritte Trägerbereich 13 erstreckt sich bis zur Wurzel 16 des Pfosten D (5) und ist dort mit diesem verbunden. Die Verbindung kann dergestalt ausgeführt sein, daß der Radhausträger 3 in einer doppelwandigen Konstruktion des Pfosten D (5) gehalten ist. Durch diese Ausbildung des Radhausträgers 3 bis zum Pfosten D (5) wird insbesondere eine sonst übliche Kraftflußlücke des Seitenrahmens zwischen dem Schweller 2 und dem Pfosten D (5) geschlossen, was mit dem Doppelpfeil 17 schematisch angedeutet ist.

Zwischen dem Pfosten D (5) und dem weiter vorne angesetzten und schräg verlaufenden Pfosten C (4) liegt ein hinteres Dreieckfenster 18. Der Pfosten C (4) ist mit seinem unteren Ende an einer Verbindungsstelle 19 am dritten Trägerbereich 15 nach dem Bogen 14 abgestützt. In dem Dreieck zwischen den Pfosten C (4) und dem oberen, dritten Trägerbereich 15 ist eine Schloßbolzenaufnahme 20 angebracht. Die Anordnung des Pfosten C (4) am Radhausträger 3 in Verbindung mit einer massiven Schloßbolzenaufnahme und die Verbindung zum Pfosten D (5) ergibt in diesem Bereich einen sehr stabilen Aufbau und Trägerverbund.

Durch den weichen Einlauf des Radhausträgers 3 mit seinem unteren Trägerbereich 11 in den Schweller 2 vor dem Schwellerende 10 wird die Steifigkeit im Bereich des hinteren Türausschnitts 24 insgesamt erhöht. Insbesondere wird der Insassenschutz bei einem Seitencrash verbessert, wobei der Radhausträger 3 als Sicherheitsträger wirkt.

In Fig. 2 ist ein Querschnitt durch den Radhausträger 3 im Bereich des Radhauses 8 entlang der Linie A-A aus Fig. 1 dargestellt.

Der Radhausträger 3 weist einen geschlossenen Hohlprofilquerschnitt auf und ist als Aluminium-Strangprofil ausgebildet. Der Radhausträger 3 ist hier zwischen ein Radhausinnenblech 21 und ein Radhausaußenblech 22 eingebettet. Der Radhausträger 3 bildet somit hier teilweise die Begrenzung des Radhauses. Die dargestellten Bleche 21 und 22 bilden die Verlängerung des Pfosten D (5) nach unten zum Radhaus 8 hin.

Weiter ist an den Radhausträger 3 ein Seitenteil 23 als Türwange angeschlossen, das die Verbindung zur Radhausaußenseite hin schafft.

Mit der vorgeschlagenen Ausbildung eines Radhausträgers werden somit bei einfachem Aufbau die Karosseriesteifigkeit im Bereich des hinteren Türausschnitts 24 und des hinteren Radhauses 8 und das Crashverhalten verbessert.

## Patentansprüche

1. Tragstruktur einer Karosserie eines Personenkraftwagens,
mit einer Bodenstruktur mit jeweils einem an der Fahrzeugseite in Längsrichtung verlaufenden Schweller (2),
mit je einem sich anschließenden, hinteren Radhaus (8),
mit einem Pfosten C (4) und einem Pfosten D (5) zur Verbindung des Bereichs oberhalb eines Radhauses (8) mit der Dachstruktur (6),
mit einem Radhausträger (3) als Verbindung zwischen dem Schweller (2) und den Pfosten C und D, wobei
der Radhausträger (3) an einer Verbindungsstelle (9) vor dem rückwärtigen Ende (10) des Schwellers (3) bzw. in einem Abstand zum Radhaus (8) und damit hin zur Mitte des unteren Türausschnitts (24) und dem Schweller (2) verbunden ist,
von dieser Verbindungsstelle (9) ausgehend der Radhausträger (3) mit einem ersten, unteren Trägerbereich (11) in einem flachen Winkel nach hinten und oben ansteigt und
der Radhausträger (3) anschließend mit einem zweiten Trägerbereich (13) in einem Bogen (12) zu einer mehr senkrechten Richtung nach oben abbiegt und in diesem Bereich am hinteren Radhaus (8) anliegt,
dadurch gekennzeichnet,
daß der Radhausträger (3) anschließend an den zweiten Trägerbereich (13) mit einem dritten, oberen Trägerbereich (15) in einem zweiten Bogen (14) wieder zu einer mehr waagrechten Richtung nach schräg oben und hinten abbiegt,
daß der Pfosten C (4) auf den dritten Trägerbereich (15) nach dem zweiten Bogen (14) abgestützt und dort verbunden ist,
daß der Radhausträger (3) bis zur Wurzel (16) des Pfosten D (5) verläuft und dort verbunden ist und
daß der Radhausträger (3) einen geschlossenen Hohlprofilquerschnitt aufweist und als Leichtmetall-Strangprofil ausgebildet ist.

2. Tragstruktur einer Karosserie nach Anspruch 1, dadurch gekennzeichnet, daß der Anstiegswinkel zwischen dem Schweller (2) und dem ersten Trägerbereich (11) ca. 20°, der Anstiegswinkel zwischen dem Schweller (2) und dem zweiten Trägerbereich (13) ca. 60° und der Anstiegswinkel zwischen dem Schweller (2) und dem dritten Trägerbereich (15) ca. 30° beträgt.

3. Tragstruktur einer Karosserie nach Anspruch 1 oder 2, dadurch gekennzeichnet, daß der Pfosten C (4) ausgehend von seiner unteren Verbindungsstelle (19) schräg nach vorne und oben verläuft und daß in dem zwischen Radhausträger (3) und Pfosten C (4) gebildeten Dreieck eine Schloßbolzenaufnahme (20) angebracht ist.

4. Tragstruktur einer Karosserie nach einem der Ansprüche 1 bis 3, dadurch gekennzeichnet, daß der Radhausträger (3) in den Radhausverbund innen-außen eingebettet und an einem oberen Trägerbereich durch das Radhaus (8) außen (Außenblech 22) und innen (Innenblech 21) umfaßt ist, wobei dies die Verlängerung des Pfosten D (5) nach unten bildet.

## Claims

1. Load-bearing structure of a passenger car body shell,
having a bottom structure with a sill beam (2) extending lengthways on each side of the vehicle,
in each case with a contiguous, rear wheel house (8),
having a C-post (4) and a D-post (5) for joining the area above a wheel house (8) to the roof structure (6),
having a wheel house beam (3) as the link between the sill beam (2) and the C-post and D-post, and wherein
the wheel house beam (3) is joined at a connecting point (9) before the back end (10) of the sill beam (2) and at a distance from the wheel house (8) and thence onward to the middle of the lower door opening (24) and to the sill beam (2),
from said connecting point (9) the wheel house beam (3) rises at a shallow angle rearwards and upwards, in a first, lower beam portion (11), and
the wheel house beam (3) then curves upwards in an arc (12) in a more perpendicular direction, in a second beam portion (13), the latter portion bearing against the rear wheel house (8),
characterised in that
in a third, upper beam portion (15), contiguous with the second beam portion (13), the wheel house beam (3) then slopes back upwards and rearwards in a second arc (14) to a more horizontal direction,
the C-post (4) rests on the third beam portion (15) after the second arc (14) and is joined thereat,
the wheel house (3) extends as far as the root (16) of the D-post (5) and is joined thereat, and
the wheel house beam (3) exhibits a closed hollow profile cross-section and is in the form of an extruded light-metal profile.

2. Load-bearing structure of a body shell according to claim 1, characterised in that the angle of climb between the sill beam (2) and the first beam portion (11) is approx. 20°, the angle of climb between the sill beam (2) and the second beam portion (13) is approx. 60°, and the angle of climb between the sill beam (2) and the third beam portion (15) is approx. 30°.

3. Load-bearing structure according to claim 1 or 2, characterised in that the C-post (4) slopes obliquely forward and upward from its lower connecting point (19) and that a locking screw locator (20) is fitted in the triangle formed between the wheel house beam (3) and the C-post (4).

4. Load-bearing structure according to any of claims 1 to 3, characterised in that the wheel house beam (3) is embedded internally and externally in the wheel house composite and is enclosed by the wheel house (8) externally (outer plate 22) and internally (inner plate 21) along an upper beam portion, the said arrangement forming the continuation of the D-post (5) downwards.

## Revendications

1. Structure portante d'une carrosserie de voiture particulière, comportant
une structure de plancher comprenant des longerons (2) formant seuil de porte, qui s'étendent en direction longitudinale de chaque côté de la voiture,
un carter de roue arrière (8) qui s'y rattache de chaque côté,
un montant C (4) et un montant D (5) pour relier à la structure de toit (5) la région située au-dessus du carter de roue (8),
un support (3) du carter de roue servant de liaison entre le longeron (2) et les montants C et D,
le support (3) du carter de roue étant raccordé au longeron (2) en un point d'assemblage (9) situé en avant de l'extrémité arrière (10) du longeron (2), c'est-à-dire à distance du carter de roue (8) et, par suite, vers le milieu du bas de la baie de porte (24),
le support (3) du carter de roue remontant vers l'arrière et vers le haut, sous un angle plan, à partir de ce point d'assemblage (9), dans une première région inférieure (11) du support,
le support (3) du carter de roue s'infléchissant ensuite vers le haut, par un coude (12), vers une direction plus verticale, dans une deuxième région (13) du support, et s'appliquant contre le carter de roue arrière (8) dans cette région,
caractérisée en ce qu'a la suite de la deuxième région (13) du support, le support (3) du carter de roue s'infléchit de nouveau obliquement vers le haut et vers l'arrière, par un second coude (14), vers une direction plus horizontale, dans une troisième région supérieure (15) du support,
en ce que le montant C (4) prend appui sur la troisième région (15) du support, après le second coude (14), et y est fixé,
en ce que le support (3) du carter de roue s'étend jusqu'à la naissance (16) du montant D (5) et y est fixé, et
en ce que le support (3) du carter de roue présente une section profilée creuse fermée et est réalisé sous forme de profilé filé en métal léger.

2. Structure portante d'une carrosserie selon la revendication 1, caractérisée en ce que l'angle de montée entre le longeron (2) et la première région (11) du support s'élève à 20° environ, l'angle de montée entre le longeron (2) et la deuxième région (13) du support s'élève à 60° environ et l'angle de montée entre le longeron (2) et la troisième région (15) du support s'élève à 30° environ.

3. Structure portante d'une carrosserie selon la revendication 1 ou 2, caractérisée en ce qu'à partir de son point d'assemblage inférieur (19), le montant C (4) s'étend obliquement vers l'avant et vers le haut, et en ce qu'un logement (20) de pène de verrou est placé dans le triangle formé entre le support (3) du carter de roue et le montant C (4).

4. Structure portante d'une carrosserie selon l'une quelconque des revendications 1 à 3, caractérisée en ce que le support (3) du carter de roue est encastré intérieurement-extérieurement dans la structure composite du carter de roue et est entouréextérieurement (tôle externe 22) et intérieurement (tôle interne 21) par le carter de roue (8) dans une région supérieure du support, cela constituant vers le bas le prolongement du montant D (5).
